(19) Europäisches Patentamt / European Patent Office / Office européen des brevets

(11) **EP 4 773 218 A1**

(12) **EUROPEAN PATENT APPLICATION**
published in accordance with Art. 153(4) EPC

(43) Date of publication:
08.07.2026 Bulletin 2026/28

(21) Application number: 25869571.7

(22) Date of filing: 26.09.2025

(51) International Patent Classification (IPC):
$H01M\ 4/136^{(2010.01)}$    $H01M\ 4/62^{(2006.01)}$
$H01M\ 4/58^{(2010.01)}$    $H01M\ 4/36^{(2006.01)}$
$H01M\ 10/052^{(2010.01)}$    $H01M\ 4/02^{(2006.01)}$

(52) Cooperative Patent Classification (CPC):
H01M 4/02; H01M 4/136; H01M 4/36; H01M 4/58;
H01M 4/62; H01M 10/052; Y02E 60/10

(86) International application number:
PCT/KR2025/015253

(87) International publication number:
WO 2026/071796 (02.04.2026 Gazette 2026/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.09.2024 KR 20240131919

(71) Applicant: LG Energy Solution, Ltd.
Seoul 07335 (KR)

(72) Inventors:
• KIM, Young Jae
Daejeon 34122 (KR)
• PARK, Joo Yong
Daejeon 34122 (KR)
• LIM, Han Min
Daejeon 34122 (KR)
• KIM, Tae Gon
Daejeon 34122 (KR)

(74) Representative: Hoffmann Eitle
Patent- und Rechtsanwälte PartmbB
Arabellastraße 30
81925 München (DE)

(54) **POSITIVE ELECTRODE AND LITHIUM SECONDARY BATTERY COMPRISING SAME**

(57) The present invention relates to a positive electrode comprising a current collector, and a positive electrode active material layer disposed on the current collector, wherein the positive electrode active material layer comprises a positive electrode active material, a conductive material, and a binder, the positive electrode active material comprises a lithium iron phosphate-based compound, the conductive material comprises carbon black, and a value of R represented by Equation 1 below is 500 to 1300, and a lithium secondary battery comprising the same.

$$R = \frac{[\text{Oxygen content value of conductive material}] \times [\text{BET specific surface area value of conductive material}]}{[\text{Average particle diameter } (D_{50}) \text{ value of positive electrode active material}]} \quad \text{[Equation 1]}$$

In Equation 1, the oxygen content value (at%) of conductive material, the BET specific surface area value ($m^2/g$) of conductive material, and the average particle diameter ($D_{50}$) value ($\mu m$) of positive electrode active material are unitless numbers with the units omitted.

EP 4 773 218 A1

## Description

## TECHNICAL FIELD

The present application claims the benefit of priority based on Korean Patent Application No. 10-2024-0131919, filed on September 27, 2024, the entire contents disclosed in the Korean Patent Application are incorporated herein as a part of the specification.

The present invention relates to a positive electrode and lithium secondary battery comprising the same.

## BACKGROUND ART

Lithium secondary batteries are typically manufactured by a method of interposing a separator between a positive electrode containing a lithium-containing positive electrode active material and a negative electrode containing a negative electrode active material capable of storing lithium ions to form an electrode assembly, inserting the electrode assembly into a battery case, injecting a non-aqueous electrolyte, which serves as a lithium ion transport medium, and sealing the electrode assembly.

The lithium secondary batteries are used not only in portable electronic devices such as mobile phones and laptops, but also in electric vehicles, and demand for the batteries has been rapidly increasing with the recent expansion of electric vehicles. In particular, lithium secondary batteries used in electric vehicles require high energy density and excellent charge rate characteristics.

Meanwhile, lithium cobalt-based oxides, lithium nickel-based oxides, lithium manganese-based oxides, lithium nickel cobalt manganese-based oxides, lithium manganese phosphate-based compounds, and lithium iron phosphate-based compounds are used as positive electrode active materials for lithium secondary batteries.

Among them, lithium iron phosphate-based compounds are widely used as positive electrode active materials for lithium secondary batteries due to excellent thermal stability, excellent life characteristics, safety, and low cost, but due to relatively small particle size compared to ternary positive electrode active materials, it is difficult to form a conductive network, resulting in reduced conductivity.

Accordingly, the development of lithium secondary batteries that incorporate lithium iron phosphate-based compounds, which exhibit excellent thermal stability and life characteristics is required despite of using lithium iron phosphate-based compounds having a small particle size.

## DISCLOSURE OF THE INVENTION

## TECHNICAL PROBLEM

The present invention is to provide a positive electrode having improved life characteristics and a lithium secondary battery including the same, by ensuring that the average particle diameter ($D_{50}$) of a positive electrode active material including a lithium iron phosphate-based compound and the BET specific surface area and the oxygen content of a conductive material including carbon black satisfy a specific equation.

## TECHNICAL SOLUTION

[1] The present invention provides a positive electrode comprising a current collector and a positive electrode active material layer disposed on the current collector, wherein the positive electrode active material layer comprises a positive electrode active material, a conductive material, and a binder, the positive electrode active material comprises a lithium iron phosphate-based compound, the conductive material comprises carbon black, and a value of R represented by Equation 1 below is 500 to 1300.

[Equation 1] R = {[Oxygen content value of conductive material] x [BET specific surface area value of conductive material]} / [Average particle diameter ($D_{50}$) value of positive electrode active     [Equation 1] material]

In Equation 1, the oxygen content value (at%) of conductive material, the BET specific surface area value ($m^2/g$) of conductive material, and the average particle diameter ($D_{50}$) value ($\mu$m) of positive electrode active material are unitless numbers with the units omitted.

[2] The present invention provides the positive electrode according to [1], wherein the conductive material has a BET specific surface area of 200 $m^2/g$ to 450 $m^2/g$.

[3] The present invention provides the positive electrode according to [1] or [2], wherein the conductive material has the oxygen content of 2.0 at% to 4.5 at%.

[4] The present invention provides the positive electrode according to at least one among [1] to [3], wherein an average particle diameter ($D_{50}$) of the conductive material is 0.7 $\mu$m to 1.3 $\mu$m.

[5] The present invention provides the positive electrode according to at least one among [1] to [4], wherein an average particle diameter ($D_{50}$) of the positive electrode active material is 0.6 $\mu$m to 1.6 $\mu$m.

[6] The present invention provides the positive electrode according to at least one among [1] to [5], wherein the lithium iron phosphate-based compound is represented by Formula 1 below.

$$[\text{Formula 1}] \qquad Li_{1+x}[Fe_{1-y}M_y]PO_4$$

In Formula 1, M comprises one or more selected from the group consisting of Ni, Co, Mn, Al, Mg, Y, Zn, In, Ru, Sn, Sb, Ti, Te, Nb, Mo, Cr, Zr, W, Ir, and V, $-0.5 \leq x \leq 0.5$, and $0 \leq y < 1$.

[7] The present invention provides the positive electrode according to at least one among [1] to [6], wherein the conductive material is comprised in 0.5 wt% to 5.0 wt% based on a total weight of the positive electrode active material layer.

[8] The present invention provides the positive electrode according to at least one among [1] to [7], wherein the positive electrode active material further comprises a conductive coating layer.

[9] The present invention provides the positive electrode according to at least one among [1] to [8], wherein a weight ratio of the positive electrode active material and the conductive material is 90:10 to 99:1.

[10] The present invention provides the positive electrode according to at least one among [1] to [9], wherein the binder comprises one or more selected from the group consisting of styrene-butadiene rubber (SBR), carboxymethyl cellulose (CMC), polyvinylidene fluoride (PVDF) and polytetrafluoroethylene (PTFE).

[11] The present invention provides the positive electrode according to at least one among [1] to [10], wherein the positive electrode has a porosity of 15% to 40%.

[12] The present invention provides a lithium secondary battery comprising the positive electrode according to at least one among [1] to [11].

## ADVANTAGEOUS EFFECTS

The positive electrode according to the present invention is characterized in that, when mixing a positive electrode active material including a lithium iron phosphate-based compound having a small average particle diameter ($D_{50}$) and a conductive material including carbon black, the BET specific surface area of the conductive material is controlled to maintain uniform dispersibility, and the content of oxygen having high electronegativity is controlled to increase the dispersibility of the conductive material in a polar solvent such as N-methylpyrrolidone (NMP). As a result, the contact area between the positive electrode active material including a lithium iron phosphate-based compound and the conductive material including carbon black is increased, thereby facilitating the formation of a conductive network, and consequently, the positive electrode and a lithium secondary battery including the same may exhibit excellent life characteristics.

## BEST MODE FOR CARRYING OUT THE INVENTION

Hereinafter, the present invention will be described in more detail.

Words or terms used in the description and claims of the present invention shall not be interpreted as the meaning defined in commonly used dictionaries. The words or terms should be interpreted as having a meaning that is consistent with their meaning in the technical idea of the invention, based on the principle that an inventor may properly define the meaning of the words to best explain the invention.

In the present invention, the terms "comprise," "include," or "have" are intended to indicate the presence of a specified feature, number, step, component, or combination thereof, but should be understood not to preclude the presence or addition of one or more other features, numbers, steps, components, or combinations thereof.

In the present invention, the "BET specific surface area" is measured using a BET method, specifically, may be calculated from the nitrogen gas adsorption amount at liquid nitrogen temperature (77K) using a BELSORP-mino II from BEL Japan.

In the present invention, the "average particle diameter ($D_{50}$)" refers to the particle size at 50% of the volume-cumulative particle size distribution. The average particle diameter ($D_{50}$) may be measured using a laser diffraction method. The laser diffraction method generally allows for the measurement of particle diameters ranging from submicron to several millimeters, and may produce results with high reproducibility and high resolution.

Hereinafter, the present invention will be described in detail.

The positive electrode and lithium secondary battery according to the present invention include at least one of the configurations disclosed below and may include any combination of the configurations technically possible among the configurations described below.

### <Positive Electrode>

Hereinafter, the positive electrode according to the present invention will be described.

The positive electrode according to the present invention includes a current collector and a positive electrode active material layer disposed on the current collector, the positive electrode active material layer includes a positive electrode active material, a conductive material, and a binder, the positive electrode active material includes a lithium iron phosphate-based compound, the conductive material includes carbon black, and the value of R represented by Equation 1 below is 500 to 1300.

$$R = \frac{[\text{Oxygen content value of conductive material}] \times [\text{BET specific surface area value of conductive material}]}{[\text{Average particle diameter } (D_{50}) \text{ value of positive electrode active material}]} \qquad [\text{Equation 1}]$$

In Equation 1, the oxygen content value (at%) of conductive material, the BET specific surface area value ($m^2/g$) of conductive material, and the average particle diameter ($D_{50}$) value ($\mu m$) of positive electrode active material are all unitless numbers with the units omitted.

Since positive electrode active materials containing lithium iron phosphate-based compounds have relatively small average particle diameters ($D_{50}$) compared to nickel-cobalt-manganese ternary positive electrode active materials, a conductive material that is uniformly dispersed and has a small average particle diameter ($D_{50}$) is required to form a conductive network within an electrode. However, carbon nanotubes, which are conventionally widely used as conductive materials, are several micrometers ($\mu m$) long but only tens of nanometers (nm) in diameter and lead to particle agglomeration, thereby making uniform dispersion difficult when mixed with positive electrode active materials having a small average particle diameter ($D_{50}$), and resulting in insufficient electrical conduction paths.

However, since carbon black has an sp3 structure, a three-dimensional structure that forms four $\sigma$-bonds, it is relatively flexible and non-aggregated compared to carbon nanotubes having an sp2 structure, and is superior in terms of dispersibility. In addition, carbon black, composed of extremely fine, nearly spherical particles, has the advantage of being easily mixed with positive electrode active materials containing lithium iron phosphate-based compounds, enabling uniform dispersion and forming consistent conduction paths within an electrode, and forming a conductive network.

Accordingly, the inventors of the present invention used carbon black as a conductive material, which may maintain dispersibility even when mixed with a positive electrode active material having a small average particle diameter ($D_{50}$), such as a positive electrode active material including a lithium iron phosphate-based compound, and in order to optimize the dispersibility, the BET specific surface area of the carbon black conductive material was suitably increased. In addition, in order to increase the dispersibility of the carbon black conductive material in a positive electrode slurry manufacturing step including a polar solvent such as N-methylpyrrolidone (NMP), the content of atoms with high electronegativity, particularly oxygen was increased, so that a carbon black conductive material having optimized dispersibility with a positive electrode active material including a lithium iron phosphate-based compound was developed.

Accordingly, excellent electrical conductivity was realized by forming a conductive network by connecting the positive electrode active materials with the conductive material, and by including such a positive electrode, a lithium secondary battery exhibiting excellent life characteristics was developed.

Hereinafter, the positive electrode according to the present invention will be described in more detail.

The positive electrode according to the present invention has a value of R of 500 to 1300, as represented by Equation 1 below.

$$R = \frac{[\text{Oxygen content value of conductive material}] \times [\text{BET specific surface area value of conductive material}]}{[\text{Average particle diameter } (D_{50}) \text{ value of positive electrode active material}]} \qquad [\text{Equation 1}]$$

In Equation 1, the oxygen content value (at%) of conductive material, the BET specific surface area value ($m^2/g$) of conductive material, and the average particle diameter ($D_{50}$) value ($\mu m$) of positive electrode active material are all unitless numbers with the units omitted.

When the value of R is less than 500, it means that the oxygen content of the conductive material or the BET specific surface area of the conductive material is excessively low, and when the oxygen content is low, the conductive material is not uniformly dispersed in a polar solvent such as N-methylpyrrolidone (NMP), and oxygen-based functional groups present on the surface of the conductive material decrease, thereby lowering the surface energy, weakening the chemical bonding force with a binder, weakening the rigidity of a composite and ultimately weakening the adhesive strength of an electrode. In addition, when the BET specific surface area of the conductive material is low, the average particle diameter ($D_{50}$) of the conductive material becomes excessively large compared to the average particle diameter ($D_{50}$) of the positive electrode active material including a lithium iron phosphate-based compound, and the contact area between the conductive material and the positive electrode active material including a lithium iron phosphate-based compound decreases, thereby weakening the conductive network and reducing the energy density. When the value of R exceeds 1300, it means that the oxygen content or BET specific surface area of the conductive material is excessively high. Due to the high oxygen content, the conductive material is excessively oxidized, and when applied to a positive electrode with a high cell potential, side reactions with an electrolyte increase, resulting in gas generation. Furthermore, the high BET specific surface area causes particle aggregation, making uniform dispersion difficult, and ultimately resulting in non-uniform battery performance.

For example, the value of R may be preferably 600 or more, 650 or more, 700 or more, 750 or more, 800 or more, or 820 or more, and preferably 1,200 or less, 1,100 or less, 1,000 or less, 950 or less, 940 or less, 880 or less, or 870 or less. When the range is satisfied, the conductive material is well dispersed in the polar solvent, enabling uniform coating of the positive electrode slurry, and a balanced interaction between the conductive material and the positive electrode active material is achieved, thereby increasing the electrical conductivity of the electrode. In addition, a conductive material having an average particle diameter ($D_{50}$) similar to that of the positive electrode active material including the lithium iron phosphate-based compound is formed, thereby optimizing the contact area between the positive electrode active material and the conductive material. Accordingly, a stable conductive network is formed, reducing resistance and thus maximizing the life characteristics.

Meanwhile, the current collector according to the present invention is not particularly limited as long as it is conductive and does not induce chemical changes in the battery. For example, stainless steel, aluminum, nickel, titanium, calcined carbon, or aluminum or stainless steel, surface-treated with carbon, nickel, titanium, silver, or the like may be used.

In addition, the current collector typically has a thickness of 3 $\mu$m to 500 $\mu$m, and preferably, a thickness of 300 $\mu$m or less, 200 $\mu$m or less, 100 $\mu$m or less, or 80 $\mu$m or less. Fine unevenness may be formed on the surface of the current collector to enhance the adhesion of the positive electrode active material. For example, the current collector may be used in various forms, such as films, sheets, foils, nets, porous bodies, foams, and non-woven fabrics.

The positive electrode active material layer is disposed on the current collector. The positive electrode active material layer may be disposed on at least one surface of the current collector. Specifically, the positive electrode active material layer may be disposed on one or both surfaces of the current collector.

The positive electrode active material layer includes a positive electrode active material, a conductive material, and a binder.

First, the conductive material of the present invention will be described.

The conductive material of the present invention includes carbon black. Carbon black is composed of fine particles, providing a large specific surface area, which increases the contact area with the positive electrode active material and a denser conductive path, thereby improving the conductive network. Furthermore, the carbon black may be evenly dispersed, allowing for uniform distribution of the conductive material even when applied to positive electrode active materials containing lithium iron phosphate-based compounds with small particle sizes, thereby maintaining consistent performance throughout the electrode. Particle size control is easily achieved based on the size of the positive electrode active material, and it is effective for use with small particles, such as positive electrode active materials containing lithium iron phosphate-based compounds. In addition, since the conductive material has a three-dimensional sp3 structure that forms four $\sigma$-bonds, each bond is symmetrically distributed, so has the characteristics of being relatively flexible and easily dispersed.

The BET specific surface area of the conductive material may be 200 m$^2$/g to 450 m$^2$/g, preferably 250 m$^2$/g to 350 m$^2$/g, and more preferably 280 m$^2$/g to 320 m$^2$/g. Within the range, the contact area between the conductive material and the positive electrode active material including the lithium iron phosphate-based compound increases, thereby strengthening the conductive network. Accordingly, an electron transfer path is effectively formed, the energy density and charge and discharge efficiency of the battery is improved, agglomeration between the conductive material does not occur, and uniform dispersion may be achieved during the subsequent preparation of a positive electrode slurry.

The oxygen content of the conductive material may be 2.0 at% to 4.5 at%, preferably 2.5 at% to 4.0 at%, 2.3 at% to 3.3 at%, 2.3 at% to 2.7 at%, or 3.1 at% to 3.8 at%. When the range is satisfied, oxygen-based functional groups on the surface of the conductive material are present appropriately, the interaction with polar solvents such as N-methylpyrrolidone (NMP) is strengthened, the dispersion of the conductive material within the solvent is enhanced, the interaction between the conductive material and the binder is strengthened, and the rigidity of a composite is enhanced. Furthermore, since the carbon black conductive material is not excessively oxidized, the conductive network is maintained.

The average particle diameter ($D_{50}$) of the conductive material may be 0.7 $\mu$m to 1.3 $\mu$m, preferably 0.8 $\mu$m to 1.2

$\mu$m, and more preferably 0.85 $\mu$m to 1.15 $\mu$m. When the range is satisfied, the average particle diameter ($D_{50}$) of the conductive material is similar to that of the positive electrode active material including a lithium iron phosphate-based compound, allowing the positive electrode active material and the conductive material to be uniformly mixed, forming an efficient conductive network within the electrode. Furthermore, the conductive material is easily dispersed, facilitating the uniform mixing of the conductive material within the positive electrode slurry.

The conductive material may be included in an amount of 0.5 wt% to 5.0 wt%, preferably 0.8 wt% to 4.0 wt%, and more preferably 1.0 wt% to 2.0 wt%, based on the total weight of the positive electrode active material layer. When included in the range, the electrode capacity is excellent, and the effect of forming a conductive path may be maximized by optimizing the dispersibility.

Next, the positive electrode active material of the present invention will be described.

The positive electrode active material of the present invention includes a lithium iron phosphate-based compound. Lithium iron phosphate-based compounds have the advantage of excellent thermal stability, thereby having excellent lifespan characteristics and stability of lithium secondary batteries.

The lithium iron phosphate-based compound may be represented by Formula 1 below.

$$[\text{Formula 1}] \qquad Li_{1+x}[Fe_{1-y}M_y]PO_4$$

In Formula 1, M may include one or more selected from the group consisting of Ni, Co, Mn, Al, Mg, Y, Zn, In, Ru, Sn, Sb, Ti, Te, Nb, Mo, Cr, Zr, W, Ir, and V. The lithium iron phosphate-based compound may be doped with M. In this case, the diffusivity of lithium ions is increased, and as a result, the electrochemical characteristics of a lithium secondary battery including the positive electrode active material may be improved.

In addition, x may be $-0.5 \leq x \leq 0.5$, preferably $-0.2 \leq x \leq 0.2$, more preferably $-0.1 \leq x \leq 0.1$.

In addition, y may be $0 \leq y < 1$, preferably $0 \leq y < 0.3$, more preferably $0 \leq y < 0.05$.

The lithium iron phosphate-based compound may be, for example, $LiFePO_4$, $Li(Fe,Mn)PO_4$, $Li(Fe,Co)PO_4$, $Li(Fe,Ni)PO_4$, or a mixture thereof, and may be preferably $LiFePO_4$.

The lithium iron phosphate-based compound may further include a conductive coating layer on the surface thereof. The conductive coating layer is for improving the conductivity of the lithium iron phosphate-based compound and may include one or a mixture of two or more selected from the group consisting of carbon-based materials, metals, and conductive polymers. Among them, when a conductive coating layer of a carbon-based material is included, the conductivity may be effectively improved without significantly increasing the weight of the lithium iron phosphate-based compound.

The conductive coating layer may be formed according to the conventional coating layer formation method and may be present in an amount of 1 wt% to 7 wt%, preferably 1 wt% to 5 wt%, based on the total weight of the lithium iron phosphate-based compound. When included in this range, the LFP content may be relatively reduced, preventing deterioration of battery characteristics and improving conductivity according to the formation of the conductive layer.

The average particle diameter ($D_{50}$) of the positive electrode active material may be 0.6 $\mu$m to 1.6 $\mu$m, preferably 0.8 $\mu$m to 1.4 $\mu$m, and more preferably 0.85 $\mu$m to 1.2 $\mu$m. When the above range is satisfied, the small particle size reduces the passage of lithium ions into and out of the positive electrode active material, which is advantageous in terms of capacity and output.

The positive electrode active material may be included in an amount of 80 wt% to 99 wt%, preferably 90 wt% to 98 wt%, and more preferably 95 wt% to 98 wt%, based on the total weight of the positive electrode active material layer. When included in this range, the electrode has excellent capacity and energy density and may exhibit excellent effects in both optimizing the functions of the conductive material and binder.

The weight ratio of the positive electrode active material and the conductive material may be 90:10 to 99:1, preferably 95:5 to 99:1, and more preferably 96:4 to 99:1. When the range is satisfied, a balance is achieved between the positive electrode active material and the conductive material, providing a sufficient electron transport path within the electrode, thereby stably operating the electrode during charge and discharge, minimizing capacity degradation of the lithium secondary battery and suppressing resistance increase.

Next, the binder of the present invention will be described.

The binder of the present invention serves to enhance the adhesion between positive electrode active material particles and the adhesion between the positive electrode active material and the current collector. Preferably, the binder may include one or more selected from the group consisting of styrene-butadiene rubber (SBR), carboxymethyl cellulose (CMC), polyvinylidene fluoride (PVDF), and polytetrafluoroethylene (PTFE).

The binder may be included in an amount of 0.1 wt% to 10.0 wt%, preferably 1.0 wt% to 5.0 wt%, and more preferably 2.0 wt% to 4.0 wt%, based on the total weight of the positive electrode active material layer. When the binder content is within the range, it is effective in increasing the energy density per volume, lowering the electrode resistance, and maintaining the adhesive strength of the electrode.

The positive electrode may have a porosity of 15% to 40%, preferably 20% to 35%, and more preferably 25% to 30%. When this range is satisfied, electrolyte impregnation is improved, resulting in even better capacity characteristics.

The positive electrode may be manufactured by a method known in the art. For example, the positive electrode may be manufactured by mixing a positive electrode active material, a binder, and a conductive material in a solvent to prepare a positive electrode slurry, applying the positive electrode slurry onto a current collector, followed by drying and rolling. Alternatively, the positive electrode slurry may be cast onto a separate support and peeled from the support, and then, the resulting film is laminated onto a current collector. In this case, as the solvent of the positive electrode slurry, positive electrode slurry solvents generally used in the relevant technical field may be used, and for example, dimethyl sulfoxide (DMSO), isopropyl alcohol, N-methylpyrrolidone (NMP), acetone, water, or a mixture thereof may be used, without limitation. The solvent may be used in an amount that dissolves or disperses the positive electrode active material, conductive material, and binder and has a viscosity that allows the negative electrode slurry to be uniformly coated.

**<Lithium Secondary Battery>**

Hereinafter, a lithium secondary battery according to the present invention will be described.

The lithium secondary battery according to the present invention includes: a positive electrode according to the present invention; a negative electrode positioned opposite to the positive electrode; and an electrolyte. Optionally, the lithium secondary battery according to the present invention may further include a separator interposed between the positive electrode and the negative electrode.

Since the positive electrode is the same as described above, the remaining constituent elements excluding the positive electrode will be described below.

**(1) Negative Electrode**

In the lithium secondary battery according to the present invention, the negative electrode may include a negative electrode current collector and a negative electrode active material layer disposed on the negative electrode current collector. The negative electrode active material layer may include a negative electrode active material, a binder, and a conductive material.

The negative electrode current collector is not particularly limited as long as it has high conductivity and does not induce chemical changes in the battery. For example, copper, stainless steel, aluminum, nickel, titanium, heat-treated carbon, copper or stainless steel, surface-treated with carbon, nickel, titanium, silver, or the like, and aluminum-cadmium alloys, may be used.

The negative electrode current collector typically has a thickness of 3 $\mu$m to 500 $\mu$m, and preferably, a thickness of 300 $\mu$m or less, 200 $\mu$m or less, 100 $\mu$m or less, or 80 $\mu$m or less. Fine unevenness may be formed on the surface of the current collector to enhance adhesion with the negative electrode active material. For example, the negative electrode current collector may be used in various forms, such as films, sheets, foils, nets, porous bodies, foams, and non-woven fabrics.

The negative electrode active material layer may be disposed on the negative electrode current collector. The negative electrode active material layer may be disposed on at least one surface of the negative electrode current collector. Preferably, the negative electrode active material layer may be disposed on one side or both sides of the negative electrode current collector.

The negative electrode active material may be a compound capable of reversible intercalation and deintercalation of lithium, for example, carbon materials such as artificial graphite, natural graphite, Kish graphite, pyrolytic carbon, meso-carbon microbeads, mesophase pitches, petroleum or coal tar pitch derived cokes, mesophase pitch-based carbon fiber, graphitized carbon fiber, amorphous carbon, soft carbon, or hardened carbon; metalloid materials capable of alloying with lithium, such as Si, Al, Sn, Pb, Zn, Bi, In, Mg, Ga, Cd, Si alloy, Sn alloy, or Al alloy; metalloid oxide materials capable of doping and de-doping lithium, such as $SiO_b$ (0<b≤2), $SnO_2$, vanadium oxide, and lithium vanadium oxide; hetero-composite materials, such as Si-C composites or Sn-C composites; or metallic lithium thin films, may be used, and one or a mixture of two or more thereof may be used.

Preferably, the negative electrode active material may include one or more selected from the group consisting of silicon-based active materials, carbon-based active materials, and silicon-carbon composite active materials. More preferably, the carbon-based active material may include one or more selected from the group consisting of artificial graphite, natural graphite, softened carbon, and hardened carbon, the silicon-based active material may include pure Si particles and/or $SiO_b$ (0<b≤2), and the silicon-carbon composite active material may include a Si-C composite. Furthermore, the negative electrode active material may be a mixed active material in which two or more of the above-mentioned materials are mixed.

The negative electrode active material may be included, based on the total weight of the negative electrode active material layer, in an amount of 60 wt% to 99 wt%, and preferably, may be included in an amount of 70 wt% or more, 80 wt% or more, 85 wt% or more, or 90 wt% or more, and may also be included in an amount of 98 wt% or less, 97 wt% or less, or 95 wt% or less.

The binder is a component that assists in bonding between the conductive material, the active material, and the current collector, and may typically be added in an amount of 0.1 wt% to 10 wt% based on the total weight of the negative electrode active material layer, and may be included in an amount of 0.2 wt% or more, 0.3 wt% or more, or 0.5 wt% or more, and may also be included in an amount of 8 wt% or less, or 5 wt% or less. Examples of the binder may include one or more selected from the group consisting of a styrene-butadiene copolymer, an acrylate styrene-butadiene copolymer, an acrylonitrile-butadiene copolymer, an acrylonitrile-butadiene-styrene copolymer, acrylic rubber, butyl rubber, fluoro rubber, polytetrafluoroethylene, polyethylene, polypropylene, ethylene propylene copolymer, polyethylene oxide, polyvinylpyrrolidone, polyepichlorohydrin, polyphosphazene, polyacrylonitrile, polystyrene, ethylene propylene diene copolymer, polyvinylpyridine, chlorosulfonated polyethylene, latex, a polyester resin, an acrylic resin, a phenol resin, an epoxy resin, and polyvinyl alcohol. Among them, one or more selected from the group consisting of a styrene-butadiene copolymer, an acrylate styrene-butadiene copolymer, an acrylonitrile-butadiene copolymer, an acrylonitrile-butadiene-styrene copolymer, carboxymethyl cellulose, hydroxypropylmethyl cellulose, hydroxypropyl cellulose, diacetyl cellulose, cellulose acetate butyrate, cellulose acetate propionate, cyanoethyl pullulan, cyanoethyl polyvinyl alcohol, cyanoethyl cellulose, and cyanoethyl sucrose, may be included. Preferably, carboxymethyl cellulose, hydroxypropylmethyl cellulose, hydroxypropyl cellulose, or a mixture thereof may be applied.

The conductive material is a component for further improving the conductivity of the negative electrode active material, and may be added in an amount of 10 wt% or less, preferably 5 wt% or less, 3 wt% or less, 2 wt% or less, or 1 wt% or less, and may also be included in an amount of 0.01 wt% or more, 0.05 wt% or more, 0.08 wt% or more, 0.1 wt% or more, or 0.3 wt% or more, based on the total weight of the negative electrode active material layer. The conductive material is not particularly limited as long as it has conductivity without causing a chemical change in the battery, and for example, graphite such as natural graphite or artificial graphite; carbon black such as acetylene black, Ketjen black, channel black, furnace black, lamp black, or thermal black; conductive fibers such as carbon fiber or metal fiber; fluorinated carbon; metal powder such as aluminum or nickel powder; conductive whisker of zinc oxide or potassium titanate; conductive metal oxides such as titanium oxide; and conductive materials such as polyphenylene derivatives, may be used.

The negative electrode active material layer may be manufactured by applying and drying a negative electrode slurry composition prepared by dissolving or dispersing a negative electrode active material, and optionally a binder and a conductive material in a solvent, on a negative electrode current collector, or by casting the negative electrode slurry composition on a separate support, and then laminating a film obtained by peeling off from the support on a negative electrode current collector.

### (2) Electrolyte

The electrolyte may include, but is not limited to, organic liquid electrolytes, inorganic liquid electrolytes, solid polymer electrolytes, gel-type polymer electrolytes, solid inorganic electrolytes, and molten-type inorganic electrolytes that may be used in the manufacture of lithium secondary batteries.

The electrolyte may include a lithium salt and an organic solvent.

The lithium salt may be used without particular limitation as long as it is a compound capable of providing lithium ions used in lithium secondary batteries. Preferably, the anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ 및 $(CF_3CF_2SO_2)_2N^-$, and the lithium salt may use $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN (CF_3SO_2)_2$, $LiCl$, $LiI$, or $LiB(C_2O_4)_2$. The concentration of the lithium salt is preferably within the range of 0.1 to 2.0 M. When the concentration of the lithium salt is within the range, the electrolyte may have appropriate conductivity and viscosity and may exhibit excellent electrolyte performance, and lithium ions may move effectively.

The organic solvent may be used without particular limitation as long as it can serve as a medium through which ions involved in the electrochemical reaction of the battery may move. Preferably, the organic solvent includes ester-based solvents such as methyl acetate, ethyl acetate, $\gamma$-butyrolactone, and $\varepsilon$-caprolactone; ether-based solvents such as dibutyl ether or tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles such as R-CN (R represents a linear, branched, or cyclic hydrocarbon group having 2 to 20 carbon atoms and may include a double-bonded aromatic ring or an ether bond); amides such as dimethylformamide; dioxolanes such as 1,3-dioxolane; or sulfolanes. Among them, carbonate-based solvents are preferable, and a mixture of a cyclic carbonate (for example, ethylene carbonate or propylene carbonate) with high ionic conductivity and high dielectric constant that may improve the charge and discharge performance of the battery and a low-viscosity linear carbonate compound (for example, ethyl methyl carbonate, dimethyl carbonate, or diethyl carbonate) is more preferable.

In addition to the electrolyte components, the electrolyte may further include one or more additives, such as haloalkylene carbonate-based compounds such as difluoroethylene carbonate, pyridine, triethylphosphite, triethanolamine, cyclic ethers, ethylene diamine, n-glyme, hexamethylphosphoric acid triamide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxyethanol, or aluminum trichloride, for the purpose of improving the life characteristics of the battery, suppressing battery capacity decrease, and improving the discharge capacity of the battery. In this case, the additives may be included in an amount of 0.1 to 5 wt% based on the total weight of the electrolyte.

**(3) Separator**

The separator physically separates the negative electrode and the positive electrode and provides a path for lithium ions, and any separator typically used in lithium secondary batteries may be used without particular limitation. In this case, the separator may be disposed between the positive electrode and the negative electrode.

Preferable examples include porous polymer films, for example, porous polymer films formed from polyolefin-based polymers such as ethylene homopolymer, propylene homopolymer, ethylene/butene copolymer, ethylene/hexene copolymer, and ethylene/methacrylate copolymer, or laminated structures of two or more layers thereof. In addition, typical porous non-woven fabrics, for example, non-woven fabrics formed from high-melting-point glass fibers or polyethylene terephthalate fibers, may also be used. Furthermore, coated separators containing ceramic components or polymer materials for securing heat resistance or mechanical strength may be used and may optionally be used in a single-layer or a multi-layer structure.

The lithium secondary battery according to the present invention may be usefully applied to portable devices such as mobile phones, laptop computers, and digital cameras, as well as electric vehicles such as hybrid electric vehicles (HEVs). The lithium secondary battery according to the present invention may achieve excellent output characteristics even at low temperature conditions, and may be particularly usefully used in the electric vehicle field.

According to another embodiment of the present invention, a battery module including the lithium secondary battery according to the present invention as a unit cell and a battery pack including the same are provided.

The battery module or battery pack may be used as a power source for one or more medium- to large-sized devices, such as power tools; electric vehicles, including electric vehicles (EVs), hybrid electric vehicles, and plug-in hybrid electric vehicles (PHEVs); or power storage systems.

Hereinafter, the present invention will be described in more detail through specific examples. However, the following examples are intended to enable those skilled in the art to fully understand and easily practice the present invention. The scope of the present invention is not limited to the following examples.

**Examples 1 to 5 and Comparative Examples 1 to 4**

A lithium iron phosphate-based compound having particle size characteristics as shown in Table 1 below, and having a composition similar to $LiFePO_4$, was used as a positive electrode active material, and carbon black having particle size characteristics and a specific surface area as shown in Table 1 below was used as a conductive material to manufacture positive electrodes of Examples 1 to 5 and Comparative Examples 1 to 4.

Specifically, the positive electrode active material, conductive material, and a PVDF binder were mixed at a weight ratio of 96:1.2:2.8, and a N-methylpyrrolidone solvent was added to achieve the solid content of 60%. The mixture was then mixed using a homogenizer at 2,500 rpm for 1 hour to produce a positive electrode slurry.

Then, the positive electrode slurry was applied to one surface of an aluminum current collector, dried at 130°C, and rolled twice using a roll-to-roll rolling machine at a linear pressure of 1 ton/cm to manufacture a positive electrode.

In addition, the values of R represented by Equation 1 below was calculated and shown in Table 1.

R = [Average particle diameter ($D_{50}$) value of positive electrode active material] / {[Oxygen content value of conductive material] x [BET specific surface area value of conductive material]}    [Equation 1]

In Equation 1, the oxygen content value (at%) of conductive material, the BET specific surface area value ($m^2/g$) of conductive material, and the average particle diameter ($D_{50}$) value ($\mu$m) of positive electrode active material are each unitless numbers with the units omitted.

[Table 1]

|  | Oxygen content of conductive material [at%] | BET specific surface area of conductive material [m²/g] | Average particle diameter ($D_{50}$) of positive electrode active material [μm] | R value |
|---|---|---|---|---|
| Example 1 | 2.7 | 310 | 1.1 | 760.9 |
| Example 2 | 2.6 | 275 | 1.1 | 650.0 |
| Example 3 | 2.3 | 304 | 0.7 | 998.9 |
| Example 4 | 3.1 | 185 | 1.1 | 521.4 |
| Example 5 | 3.3 | 425 | 1.1 | 1275.0 |
| Comparative Example 1 | 0.6 | 265 | 1.1 | 144.5 |
| Comparative Example 2 | 7.5 | 270 | 1.1 | 1840.9 |
| Comparative Example 3 | 3.0 | 267 | 1.8 | 445.0 |
| Comparative Example 4 | 3.1 | 272 | 0.45 | 1873.8 |

1) The specific surface area was measured by a BET method and was calculated from the nitrogen gas adsorption amount at liquid nitrogen temperature (77 K) using BELSORP-mino II of BEL Japan. 2) The average particle diameter ($D_{50}$) was measured by dispersing a positive electrode active material powder and a conductive material powder in a dispersion medium, introducing same into a laser diffraction particle size measuring device (Microtrac MT 3000), irradiating same with ultrasonic waves of approximately 28 kHz at an output of 60 W, obtaining a volume-cumulative particle size distribution graph, and then calculating the particle size corresponding to 50% of the volume-cumulative amount.

**Experimental Example 1: Capacity Retention Evaluation**

**<Manufacture of Lithium Secondary Battery>**

Artificial graphite was used as a negative electrode active material. A negative electrode including a negative electrode active material layer containing the negative electrode active material, CMC and SBR as negative electrode binders, and carbon black as a negative electrode conductive material in a weight ratio of 96:1.0:2.5:0.5 was prepared. Copper foil was used as a negative electrode current collector.

An electrode assembly was manufactured by interposing a separator between the positive electrode and the negative electrode manufactured in Examples 1 to 5 and Comparative Examples 1 to 4 and was then placed inside a battery case, and an electrolyte was injected into the case to manufacture a lithium secondary battery. The electrolyte was prepared by dissolving lithium hexafluorophosphate ($LiPF_6$) at a concentration of 1.2 M in a solvent containing ethylene carbonate (EC), dimethyl carbonate (DMC), and ethyl methyl carbonate (EMC) in a volume ratio of 3:4:3.

**<Capacity Retention Evaluation>**

Each lithium secondary battery manufactured above was charged to 3.8 V using an electrochemical charger/-discharger at 45°C under CC/CV, 0.5 C conditions, and then discharged to 2.5 V under CC, 1.0 C conditions. With this procedure as one cycle, charge/discharge was performed, and the capacity retention was measured.

The capacity retention was calculated using the equation below, and the capacity retention at 100 cycles is shown in Table 2.

Capacity retention (%) = (Discharge capacity after 100 cycles / Discharge capacity after 1 cycle) x 100

**Experimental Example 2: Resistance Increase Rate Evaluation**

Each lithium secondary battery manufactured above was charged to 3.8 V using an electrochemical charger/-discharger at 25°C under CC/CV, 0.5 C conditions, and then discharged to 2.5 V under CC, 1.0 C conditions. With this procedure as one cycle, cycle charge/discharge was performed.

After one cycle of charge/discharge, the discharge capacity after one cycle was measured using an electrochemical charger/discharger. The SOC was adjusted to 50%, a 2.5 C pulse was applied for 10 seconds, and the initial resistance was calculated from the difference between the voltage before and after the application of pulse.

Furthermore, the resistance after cycle charge/discharge was calculated using the same method described above, and the resistance increase rate was calculated using the equation below. The resistance increase rate at 100 cycles is shown in Table 2 below.

Resistance increase rate (%) = { (Resistance after 100 cycles of charge and discharge - Initial resistance) / Initial resistance} x 100

[Table 2]

|  | Capacity retention (%, @100th cycle) | Resistance increase rate (%, @100th cycle) |
|---|---|---|
| Example 1 | 92.5 | 2.67 |
| Example 2 | 92.0 | 3.21 |
| Example 3 | 91.0 | 2.70 |
| Example 4 | 90.3 | 3.85 |
| Example 5 | 91.5 | 3.90 |
| Comparative Example 1 | 85.4 | 7.40 |
| Comparative Example 2 | 84.8 | 7.58 |
| Comparative Example 3 | 82.1 | 6.91 |
| Comparative Example 4 | 83.4 | 8.23 |

Referring to Table 2 above, it can be confirmed that the lithium secondary batteries of Examples 1 to 5, in which the value of R is in the range of 500 to 1300, exhibit superior cycle capacity retention and low resistance increase rate compared to the lithium secondary batteries of Comparative Examples 1 to 4, not satisfying the conditions.

**Claims**

1. A positive electrode comprising:

   a current collector; and
   a positive electrode active material layer disposed on the current collector, wherein
   the positive electrode active material layer comprises a positive electrode active material, a conductive material, and a binder,
   the positive electrode active material comprises a lithium iron phosphate-based compound,
   the conductive material comprises carbon black, and
   a value of R represented by the following Equation 1 is 500 to 1300:

   R = {[Oxygen content value of conductive material] x [BET specific surface area value of conductive material]} / [Average particle diameter ($D_{50}$) value of positive electrode active material]      [Equation 1]

   in Equation 1, the oxygen content value (at%) of conductive material, the BET specific surface area value ($m^2$/g) of conductive material, and the average particle diameter ($D_{50}$) value ($\mu$m) of positive electrode active material are unitless numbers with the units omitted.

2. The positive electrode according to claim 1, wherein the conductive material has a BET specific surface area of 200 $m^2$/g to 450 $m^2$/g.

3. The positive electrode according to claim 1, wherein the conductive material has the oxygen content of 2.0 at% to 4.5 at%.

4. The positive electrode according to claim 1, wherein an average particle diameter ($D_{50}$) of the conductive material is 0.7 $\mu$m to 1.3 $\mu$m.

5. The positive electrode according to claim 1, wherein an average particle diameter ($D_{50}$) of the positive electrode active material is 0.6 $\mu$m to 1.6 $\mu$m.

6. The positive electrode according to claim 1, wherein the lithium iron phosphate-based compound is represented by the following Formula 1:

[Formula 1] $\qquad$ $Li_{1+x}[Fe_{1-y}M_y]PO_4$

in Formula 1, M comprises one or more selected from the group consisting of Ni, Co, Mn, Al, Mg, Y, Zn, In, Ru, Sn, Sb, Ti, Te, Nb, Mo, Cr, Zr, W, Ir, and V, $-0.5 \leq x \leq 0.5$, and $0 \leq y < 1$.

7. The positive electrode according to claim 1, wherein the conductive material is comprised in 0.5 wt% to 5.0 wt% based on a total weight of the positive electrode active material layer.

8. The positive electrode according to claim 1, wherein the positive electrode active material further comprises a conductive coating layer.

9. The positive electrode according to claim 1, wherein a weight ratio of the positive electrode active material and the conductive material is 90:10 to 99:1.

10. The positive electrode according to claim 1, wherein the binder comprises one or more selected from the group consisting of styrene-butadiene rubber (SBR), carboxymethyl cellulose (CMC), polyvinylidene fluoride (PVDF) and polytetrafluoroethylene (PTFE).

11. The positive electrode according to claim 1, wherein the positive electrode has a porosity of 15% to 40%.

12. A lithium secondary battery comprising the positive electrode of claim 1.

TRANSLATION

## INTERNATIONAL SEARCH REPORT

| International application No. |
| --- |
| **PCT/KR2025/015253** |

**A. CLASSIFICATION OF SUBJECT MATTER**

**H01M 4/136**(2010.01)i; **H01M 4/62**(2006.01)i; **H01M 4/58**(2010.01)i; **H01M 4/36**(2006.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/136(2010.01); H01M 4/505(2010.01); H01M 4/525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 리튬 인산철계 화합물(Lithium iron phosphate-based compound), 양극 활물질 (cathode active material), 카본 블랙(carbon black), BET 비표면적(BET specific surface area), 산소 함유량(oxygen content)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2017-0111069 A (LG CHEM, LTD.) 12 October 2017 (2017-10-12)<br>claims 1, 18; paragraphs [0006], [0046], [0051], [0068], [0070], [0081]-[0087], [0092], [0093], [0099], [0127], [0130], [0136], [0137], [0139] | 1-12 |
| A | KR 10-2021-0094055 A (DENKA COMPANY LIMITED) 28 July 2021 (2021-07-28)<br>abstract; claims 1-9 | 1-12 |
| A | KR 10-2012-0093874 A (DENKI KAGAKU KOGYO KABUSHIKIKAISHA) 23 August 2012 (2012-08-23)<br>abstract; claims 1-13 | 1-12 |
| A | KR 10-2020-0004922 A (HYDRO-QUEBEC) 14 January 2020 (2020-01-14)<br>abstract; claims 1-19 | 1-12 |
| A | KR 10-2013-0084616 A (SAMSUNG SDI CO., LTD. et al.) 25 July 2013 (2013-07-25)<br>abstract; claims 1-19 | 1-12 |

☐ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **05 January 2026** | **06 January 2026** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

TRANSLATION

**INTERNATIONAL SEARCH REPORT**
**Information on patent family members**

International application No.

**PCT/KR2025/015253**

| Patent document cited in search report | | | Publication date (day/month/year) | Patent family member(s) | | | Publication date (day/month/year) |
|---|---|---|---|---|---|---|---|
| KR | 10-2017-0111069 | A | 12 October 2017 | KR | 10-2086533 | B1 | 09 March 2020 |
| KR | 10-2021-0094055 | A | 28 July 2021 | CN | 113169310 | A | 23 July 2021 |
| | | | | CN | 113169310 | B | 05 November 2024 |
| | | | | EP | 3890062 | A1 | 06 October 2021 |
| | | | | EP | 3890062 | A4 | 27 April 2022 |
| | | | | EP | 3890062 | B1 | 23 August 2023 |
| | | | | JP | 2021-111201 | A1 | 21 October 2021 |
| | | | | JP | 7490567 | B2 | 27 May 2024 |
| | | | | KR | 10-2828214 | B1 | 03 July 2025 |
| | | | | US | 12132204 | B2 | 29 October 2024 |
| | | | | US | 2022-0013777 | A1 | 13 January 2022 |
| | | | | WO | 2020-111201 | A1 | 04 June 2020 |
| KR | 10-2012-0093874 | A | 23 August 2012 | CN | 102668191 | A | 12 September 2012 |
| | | | | CN | 102668191 | B | 22 April 2015 |
| | | | | EP | 2503626 | A1 | 26 September 2012 |
| | | | | EP | 2503626 | A4 | 05 February 2014 |
| | | | | EP | 2503626 | B1 | 23 May 2018 |
| | | | | JP | 2011-108522 | A | 02 June 2011 |
| | | | | JP | 5486907 | B2 | 07 May 2014 |
| | | | | KR | 10-1951488 | B1 | 22 February 2019 |
| | | | | US | 2012-0258363 | A1 | 11 October 2012 |
| | | | | US | 8597835 | B2 | 03 December 2013 |
| | | | | WO | 2011-062019 | A1 | 26 May 2011 |
| KR | 10-2020-0004922 | A | 14 January 2020 | CN | 104471753 | A | 25 March 2015 |
| | | | | CN | 104471753 | B | 09 March 2018 |
| | | | | EP | 2847813 | A1 | 18 March 2015 |
| | | | | EP | 2847813 | A4 | 20 January 2016 |
| | | | | EP | 2847813 | B1 | 21 April 2021 |
| | | | | EP | 3869604 | A1 | 25 August 2021 |
| | | | | JP | 2015-519699 | A | 09 July 2015 |
| | | | | JP | 2017-123351 | A | 13 July 2017 |
| | | | | JP | 6405302 | B2 | 17 October 2018 |
| | | | | JP | 6405407 | B2 | 17 October 2018 |
| | | | | KR | 10-2015-0021033 | A | 27 February 2015 |
| | | | | KR | 10-2065579 | B1 | 13 January 2020 |
| | | | | KR | 10-2215419 | B1 | 16 February 2021 |
| | | | | US | 10050270 | B2 | 14 August 2018 |
| | | | | US | 2015-0162610 | A1 | 11 June 2015 |
| | | | | WO | 2013-166598 | A1 | 14 November 2013 |
| KR | 10-2013-0084616 | A | 25 July 2013 | CN | 103208623 | A | 17 July 2013 |
| | | | | EP | 2618405 | A2 | 24 July 2013 |
| | | | | EP | 2618405 | A3 | 23 July 2014 |
| | | | | JP | 2013-149615 | A | 01 August 2013 |
| | | | | JP | 6203497 | B2 | 27 September 2017 |
| | | | | US | 2013-0183579 | A1 | 18 July 2013 |

Form PCT/ISA/210 (patent family annex) (July 2022)

## EP 4 773 218 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240131919